(19) Europäisches Patentamt
European Patent Office
Office européen des brevets

(11) **EP 2 608 198 A1**

(12) **EUROPEAN PATENT APPLICATION**

(43) Date of publication:
**26.06.2013 Bulletin 2013/26**

(21) Application number: **12197652.6**

(22) Date of filing: **18.12.2012**

(51) Int Cl.:
*G10L 21/0208* (2013.01) *H03G 3/34* (2006.01)
*H04R 1/40* (2006.01) *H04R 3/00* (2006.01)
*A63F 13/06* (2006.01) *G06F 3/02* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.12.2011 US 201161578898 P**

(71) Applicant: **Bone Tone Communications Ltd.
Tortola 1110 (VG)**

(72) Inventors:
• **Yehuday, Uri**
59642 Bat-Yam (IL)
• **Heiman, Arie**
44935 Sde Warburg (IL)

(74) Representative: **Modiano, Micaela Nadia
Modiano & Partners (DE)
Thierschstrasse 11
80538 München (DE)**

(54) **System and method for reduction of mechanically-generated noise**

(57) A system that includes a mechanical element that is movable by a user; a microphone that is arranged to receive sound signals that comprise (a) sound signals of interest and (b) a mechanical noise resulting from a movement of the mechanical element; a mechanical noise reduction module that is arranged to receive or to generate a noise indication that is indicative of an actual or an expected generation of the mechanical noise and to attenuate the mechanical noise in response to the noise indication to provide an attenuated mechanical noise; and a communication module that is arranged to transmit output signals that are representative of the sound signals of interest and the attenuated mechanical noise.

FIG. 1

## Description

### RELATED APPLICATIONS

This application claims priority from US provisional patent serial number 61/578898 filing date December 22 2011 which is incorporated herein by reference.

### BACKGROUND OF THE INVENTION

Modern video games platforms support on line gaming, where the game platform is activated by a handheld game controller. During online gaming multiple users can play (activate the game platform) and talk to each other.

Sound signals generated by one user (sound signals of interest) should be received by a microphone and then transmitted over the internet to another user (another player). The microphone can be included in a headset worn by the user or can be embedded in the handheld game controller.

The handheld game controller includes mechanical elements such as buttons, joysticks and knobs that allow the user to participate in the game. The user usually moves one or more mechanical element during the gate and each movement results in a generation of a mechanical noise.

A microphone that is embedded in the handheld game controller receives the mechanical noise in addition to sound signals of interest. The combination of the mechanical noise and the sound signals of interest are transmitted to the other user and this causes the other user to hear the mechanical noise and to negatively affect the gaming experience of the other user. Due to the proximity of the embedded microphone to the mechanical element and due to a mechanical coupling that may exist between the embedded microphone and the mechanical elements the embedded microphone can be more sensitive to the mechanical noise than to the sound signals of interest - and thus the mechanical noise can be virtually amplified in relation to the sound signals of interest - and this may further reduce the gaming experience of the other user.

There is a growing need to provide a system and a method for attenuating the mechanical noise transmitted to the other user.

### SUMMARY OF THE INVENTION

According to various embodiments of the invention there may be provided a system that may include

Any combinations of any of the components of any of the figures can be provided. Any combination of any of the mentioned above systems can be provided.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof may best be understood by reference to the following detailed description when read with the accompanying drawings in which:

FIG. 1 illustrates a system according to an embodiment of the invention;

FIG. 2 illustrates a system according to an embodiment of the invention;

FIG. 3 illustrates a system according to an embodiment of the invention;

FIG. 4 illustrates a system according to an embodiment of the invention;

FIG. 5 illustrates some of the signals that are received by a signal processor of the system and some signals that are outputted by the signal processor according to an embodiment of the invention;

FIG. 6 illustrates some of the signals that are received by a signal processor of the system and some signals that are outputted by the signal processor according to an embodiment of the invention; and

FIG. 7 illustrates a method according to an embodiment of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE DRAWINGS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

Because the illustrated embodiments of the present invention may, for the most part, be implemented using electronic components and modules known to those skilled in the art, details will not be explained in any greater extent than that considered necessary as illustrated above, for the understanding and appreciation of the underlying concepts of the present invention and in order not to obfuscate or distract from the teachings of the present invention.

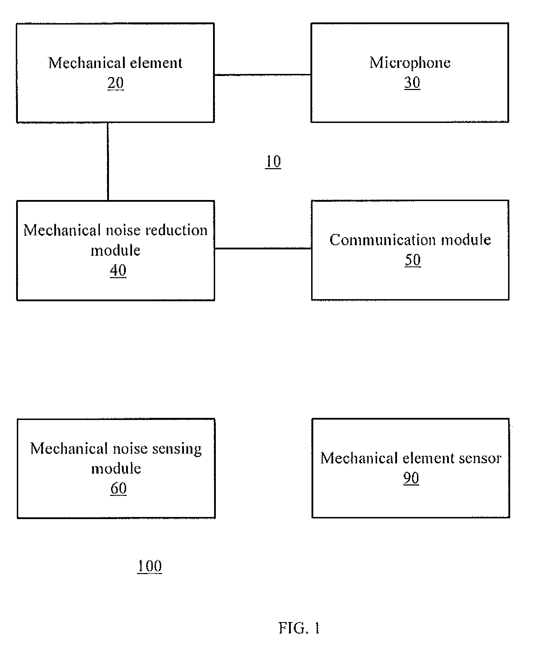

Figure 1 illustrates a system 10 according to an embodiment of the invention.

System 10 is illustrated as including:

1. A mechanical element 20 that is movable by a user (there may be multiple mechanical elements movable by the user);

2. A microphone 30 that is arranged to receive sound signals that comprise (a) sound signals of interest and (b) a mechanical noise resulting from a movement of the mechanical element 20.

3. A mechanical noise reduction module 40 that is arranged to receive or to generate a noise indication that is indicative of an actual or an expected generation of the mechanical noise and to attenuate the mechanical noise in response to the noise indication to provide an attenuated mechanical noise.

4. A communication module 50 that is arranged to transmit output signals that are representative of the sound signals of interest and the attenuated mechanical noise.

System 10 can be a game controller, a handheld game controller, a mobile device, a phone conference system and the like. If system 100 is a game controller than it is arranged to translate the movement of the mechanical element to game related commands. The translation can be assisted by mechanical element sensor 90.

Figure 1 also illustrates system 100 as including mechanical noise sensing module 60 that is arranged to generate the noise indication. The mechanical noise sensing module 60 can be included in the mechanical noise reduction module 40 or be implemented as a distinct module.

The mechanical noise sensing module 60 can be arranged to sense vibrations generated by the movement of the mechanical element and to generate the noise indication in response to the vibrations.

The mechanical noise sensing module 60 can include (or be coupled to) a sensor such as an accelerometer that is arranged to sense the vibrations. Additionally or alternatively, the mechanical noise sensing module 60 can include (or be coupled to) a sensor such as a bone conduction microphone that is arranged to sense the vibrations.

The output signals of any sensor can be regarded as the noise indication. Alternatively, the output signals of any sensor can be further processed to provide the noise indication. The processing may include detecting sensor output signals that represent vibrations that can be attributed to the movement of the mechanical element. This may include ignoring vibrations that result from, for example, moving the entire system 100 without pressing a mechanical element or without generating a mechanical noise. The processing may include filtering, analog to digital conversion and the like.

Figure 1 also illustrates system 100 as including a sensor such as mechanical element sensor 90. The mechanical element sensor 90 is arranged to generate electromagnetic signals as a result of the movement of the mechanical element 20. These electromagnetic signals can be of digital format or analogue format and may include, for example, commands, interrupt requests, and the like. The mechanical element sensor 90 can be used for translating the movement of the mechanical element 20 to commands (such as game commands).

According to an embodiment of the invention the mechanical noise sensing module 60 may be arranged to generate the noise indication in response to a sensing (for example, by snooping communication lines of system 100) of the electromagnetic signals generated by the mechanical element sensor 90.

System 100 can receive information relating to the mechanical noise from microphone 30 and from mechanical noise sensing module 60. There can be a difference between a manner in which the mechanical noise sensing module 60 and the microphone 30 sense the mechanical noise. The difference can result from the different locations, different frequency response, different mechanical coupling to the mechanical element or a combination thereof between the microphone 30 and the mechanical noise sensing module 60. This difference can virtually provide more information about the mechanical noise and can help in better defining the mechanical noise and thus better attenuating it.

The mechanical noise reduction module 40 can be arranged to at least partially separate between the mechanical noise and other sound signals detected by the system by comparing signals sensed at different point of time and utilizing a similarity between mechanical noises generated at different points of time and dissimilarities between signals of interest received at the different points of time.

According to an embodiment of the invention the microphone 30 can be regarded as being a part of the mechanical noise sensing module 60.

The mechanical noise can be responsive to the manner in which the user contacts the mechanical element. The mechanical element sensor 90 can detect and/or estimate one or more movement characteristics of the movement of the mechanical element such as duration of the movement, a speed of the movement, and force applied by the user to induce the movement.

The mechanical noise reduction module 40 can attempt to attenuate the mechanical noise in response to the one or more movement characteristics.

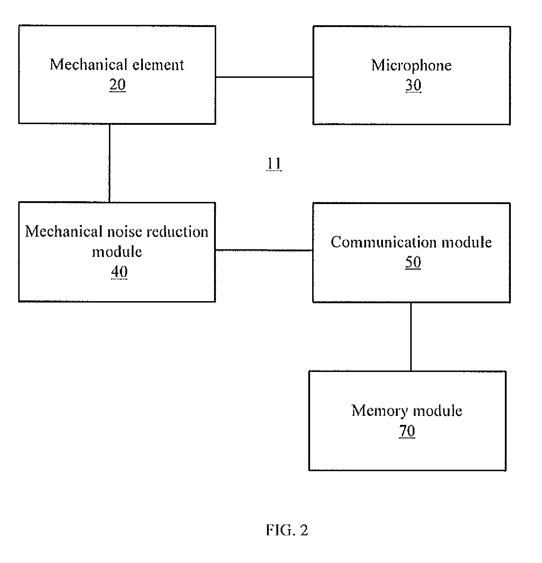

Figure 2 illustrate system 11 according to an embodiment of the invention.

System 11 differs from system 10 by including a memory module 70 that stores mechanical noise signatures 71(1) - 71(K). It is noted that K is a positive integer and that the memory module 70 can store only a single mechanical noise signature. A mechanical noise signature may include information about the mechanical noise - it can include the mechanical noise itself, a representation of the mechanical noise, and the like.

The mechanical noise signature can be generated in advance - by recording mechanical noises and optionally by processing the recorded mechanical noises. Any known signal processing algorithm may be used including filtering, averaging (or statistically processing multiple mechanical noises), compressing and the like.

According to an embodiment of the invention a mechanical noise signature represents signals generated by mechanical noise sensing module 60 or microphone 30 - for example it may represents signals generated by an accelerometer or a bone-conduction microphone that are indicative of a mechanical noise.

It is noted that different mechanical noise signatures can be associated with different mechanical elements, with different types of movements (for example-push, pull, move to one side) of one or more mechanical elements and the like.

According to an embodiment of the invention the memory module 70 may store (instead of the mechanical noise signatures or in addition to the mechanical signatures) mechanical noise attenuation signals 72(1) - 72(K) that once apply can attenuate mechanical noise signals. The mechanical noise attenuating signals can be calculated in advance and may be updated over time. A mechanical noise attenuation signal can be mathematically calculated based upon an actual or expected mechanical noise, can be updated by monitoring the success of attenuating mechanical noises, and the like.

It is noted that different mechanical noise attenuation signals can be associated with different mechanical elements, with different types of movements (for example-push, pull, move to one side) of one or more mechanical elements and the like.

The mechanical noise reduction module 60 may be arranged to attenuate the mechanical noise by processing the mechanical noise signature. It can, for example, subtract a mechanical noise signature from the signals detected by microphone 30.

According to an embodiment of the invention a selection of a mechanical noise signature or a selection of a mechanical noise attenuation signal can be responsive to a detected and/or estimated movement characteristics of the movement of the mechanical element such as duration of the movement, a speed of the movement, and force applied by the user to induce the movement.

According to an embodiment of the invention the mechanical noise reduction module 60 may be arranged to augment a selected mechanical noise signature and/or a selected mechanical noise attenuation signal in response to one or more detected and/or estimated movement characteristics of the movement of the mechanical element. For example, faster movements can be associated with higher (sound) frequencies than slower movements of the mechanical element.

The mechanical noise reduction module 40 can attempt to attenuate the mechanical noise in response to the one or more movement characteristics. For example, the mechanical noise reduction module can be arranged to augment the mechanical noise signature in response to an actual or estimated movement characteristic of the movement of the mechanical element.

Yet for another example, different mechanical noise signatures differ from each other by movement characteristics associated with the generation of the mechanical noise signatures and the mechanical noise reduction module 40 may be arranged to select a selected mechanical noise signature out of the multiple mechanical noise signatures and to attenuate the mechanical noise by processing the selected mechanical noise signature based upon an actual or estimated movement characteristic of the movement of the mechanical element.

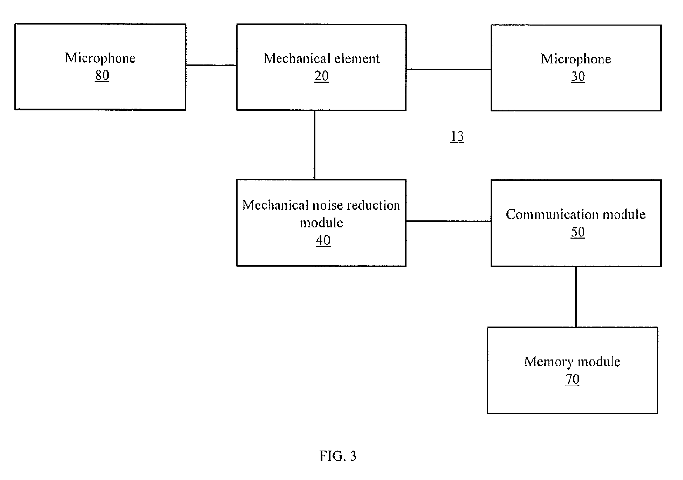

Figure 3 illustrates system 13 according to an embodiment of the invention.

System 13 differs from system 11 by including, in addition to microphone 30, an additional microphone 80. The additional microphone 80 is more sensitive to the mechanical noise than the microphone 30 but is less sensitive to sound signals of interest. The additional microphone 80 can be mainly aimed to sense the mechanical noise while microphone 30 is mainly aimed to sense the sound signals of interest.

Additional microphone 80 can be regarded as belonging to the mechanical noise sensing module 60.

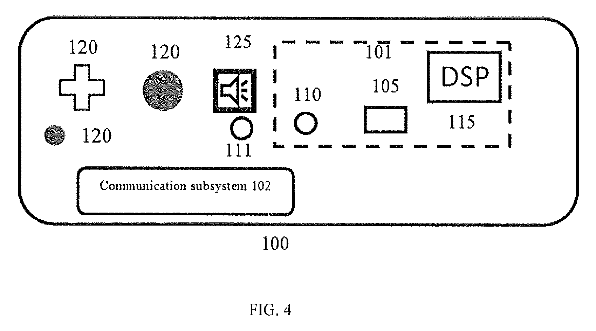

Figure 4 illustrates system 100 according to another embodiment of the invention.

System 100 may be a typical handheld game controller and may include: (i) one or more mechanical elements such as regular and navigation buttons 120, (ii) microphone 111, (iii) speaker 125, (iv) communication subsystem 102, and (v) subsystem 101.

The microphone 111 and the speaker 125 are embedded in the system 100 in order to use the handheld system for voice communication. In some cases the speaker 125 can be connected to an eternal device instead or in-addition to the handheld system. The voice and control data is transmitted and received by the communication subsystem 102.

Subsystem 101 may include (i) one or more additional microphones 110, (ii) a sensor such as accelerometer 105 attached below the cover of the system 100, and a signal processor 115. The signal processor 115 can be regarded as an implementation of the mechanical noise reduction module 40.

The accelerometer 105 may detect sounds (mechanical noise) generated by the buttons (when they are pushed or released) as the sound propagates via the system 100 cover and vibrates the accelerometer 105.

All these signals are feed to the signal processor 115. The signal processor 115 can be a Digital Signal Processor or a general purpose processor such as an ARM processor. The signal processor 115 may process relevant signals in order to eliminate the mechanical noise (such as clicks effect) and provide a clean signal (without the mechanical noise or with a mechanical noise that is attenuated to an allowable level) that is fed to the communication subsystem 102

It is noted that sub-system 101 can use sensors that differ from the accelerometer 105. Any sensor that is sensitive to the vibrations generated by a movement of a mechanical element such as button 120 can be used, especially if the sensor less sensitive to external air transmitted sound. An example to such a sensor is a bone conduction microphone.

It is noted that a single microphone can be used for sensing both sound signals of interest and the mechanical noise. Thus, a single microphone can be used instead of microphones 110 and 111. Alternatively, the system may include multiple microphones to get better spatial receiving pattern of the mechanical noise and/or the sound signals of interest. A microphone can be allocated per a mechanical element that can be moved by the user or per multiple mechanical elements.

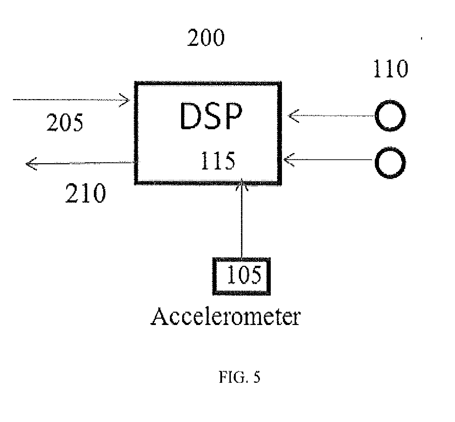

Figure 5 illustrates some of the signals that are received by the signal processor 115 and are outputted by the signal processor 115 according to an embodiment of the invention.

The microphones 110 senses sound signals s(t) that includes sound signals of interest v(t) and mechanical noise n(t) and send s(t) the signal processor 115.

Accelerometer 105 senses the vibrations and sends to signal processor 115 accelerometer output signals AC(t).

These signals (n(t) and AC(t)) are digitized by an Analogue to Digital Convertor (ADC) (not shown) to provide digital signals s(n) and AC(n).

An event indicator (may be a noise indicator such as an electromagnetic signal) e(n) may be also provided the signal processor 115 to indicate that the user pushed or released a mechanical element (such as a button) and in case that some buttons exist - it may indicate which button was moved.

The event indicator can be outputted from the accelerometer, from a mechanical element sensor (for example- from an interrupt request generator), or can be outputted from the mechanical element itself (for example- by providing a push button signal to the digital processor)

S(n) represent a signal sensed during the a period in which the mechanical noise is generated (this period can be referred to as click period) and a combination of the sound signals of interest (for example original voice) V(n) and the mechanical noise C(n), Hence S(n) = V(n)+C(n)

AC(n) does not reflect (or almost does not reflect) the sound signals of interest.

Due to the fact that the mechanical noises are detected by the microphone and the accelerometer in a different manner AC(n) can be represented by AC(n)=Alpha(n)*V(n)+Beta(n)*C(n)

Where the symbol * represents a convolution operator.

Alpha(n) and Beta(n) can be fixed and may be estimated by measuring their values once during calibration process.

Hence in the frequency domain the signal processor 115 may estimate the sound signals of interest (clean voice V(f)) by

$$V(f)= (Beta(f)S(f)\text{-}AC(f))/(Beta(f)\text{-}Alpha(f))$$

As Alpha(n)<<l, V(f)= S(f)-AC(f)/Bcta(f)

Where V(f), S(f), AC(f),Beta(f), Alpha(f) are the Fourier transfer function of V(n), S(n), AC(n), Beta(n), Alpha(n) respectively.

The digital processor then can output output signals OUT(t) that can include the sound signals of interest s(t) and an attenuated mechanical noise. Output signal OUT(t) can be transmitted by the communication subsystem 102.

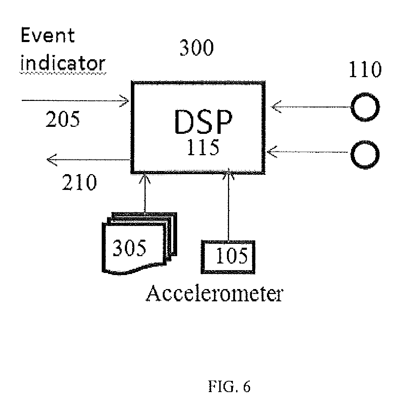

Figure 6 illustrates some of the signals that are received by the signal processor 115 and are outputted by the signal processor 115 according to an embodiment of the invention.

Figure 6 illustrates the signal processor 115 as being able to access memory module 305 that stores mechanical noise signatures such as waveform shapes of each button called CtP(i,n) where i is the waveform shape of the mechanical noise generated by button i when the user pushes that button and CtR(i,n) is the waveform shape of the mechanical noise generated when button i is released

Once the user pushes the button, event indication 205 is provided to the signal processor 115 indicating that the user pushed a specific button. Following this event V(n) can be estimated during the click period by the following equation:

$$V(n)=S(n)\text{-}GCtP(i, n)$$

Wherein G represent a gain factor that can be determined by analyzing AC(t).

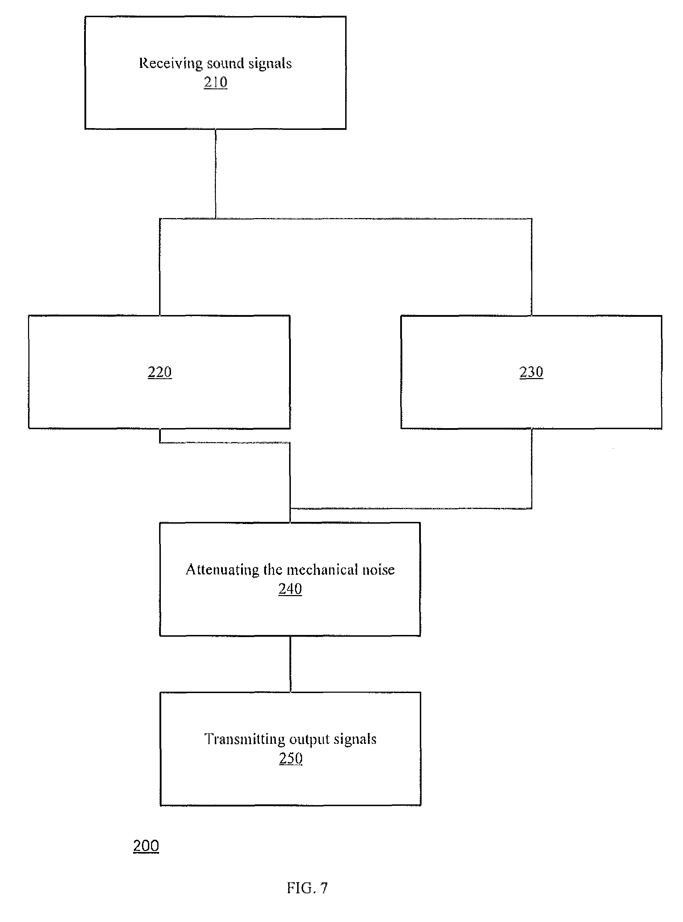

Figure 7 illustrates method 200 according to an embodiment of the invention.

Method 200 may include:

1. Receiving (210), by a microphone, sound signals that comprise (a) sound signals of interest and (b) a mechanical noise resulting from a movement of a mechanical element;

2. Receiving (220) by a mechanical noise reduction module a noise indication signal or generating (230), by the mechanical noise reduction module the noise indication. The noise indication is indicative of an actual generation of the mechanical noise or an expected generation of the mechanical noise.

3. Attenuating (240), by the mechanical noise reduction module, the mechanical noise in response to the noise indication to provide an attenuated mechanical noise (or to provide output signals that are a combination of an attenuated mechanical noise and the signals of interest).

4. Transmitting (250), by a communication module, output signals that are representative of the sound signals of interest and the attenuated mechanical noise.

Stage 220 may include:

1. Generating the noise indication by a mechanical noise sensing module.

2. Generating the noise indication by a sensor that is arranged to sense vibrations generated by the movement of the mechanical element.

3. Generating the noise indication by an accelerometer.

4. Generating the noise indication by a bone conduction.

5. Generating the noise indication in response to a sensing of an electromagnetic signal that is indicative of a movement of the mechanical element.

6. Generating the noise indication in response to a sensing of an interrupt request that is triggered by the movement of the mechanical element.

Stage 240 may include:

1. Utilizing a difference to attenuate the mechanical noise, the difference is between a manner in which the mechanical noise sensing module and the microphone sense the mechanical noise;

2. Attenuating the mechanical noise by processing a mechanical noise signature.

3. Augmenting a mechanical noise signature in response to an actual or estimated movement characteristic of the movement of the mechanical element. The movement characteristic may be duration of the movement, a speed of the movement, and force applied by the user to induce the movement.

4. Selecting a selected mechanical noise signature out of multiple mechanical noise signatures that differ from each other, and attenuating the mechanical noise by processing the selected mechanical noise signature

5. Selecting the selected mechanical noise signature in response to an actual or estimated movement characteristic of the movement of the mechanical element.

6. Estimating the mechanical noise by utilizing a similarity between mechanical noises generated at different points of time and dissimilarities between signals of interest received at the different points of time.

7. Processing signals from multiple microphones.

8. Processing signals from a microphone and an additional microphone. The additional microphone is more sensitive to the mechanical noise than the microphone and the microphone is more sensitive to the sound signals of interest than the additional microphone.

The method may also include processing signals sensed by one or more sensors during periods in which the mechanical element is not moved.

The method 200 may include selecting a mechanical noise attenuating signals and using it to attenuate the mechanical noise.

The assignment of the same reference numbers to various components may indicate that these components are similar to each other.

In the foregoing specification, the invention has been described with reference to specific examples of embodiments of the invention. It will, however, be evident that various modifications and changes may be made therein without departing from the broader spirit and scope of the invention as set forth in the appended claims.

Furthermore, the terms "assert" or "set" and "negate" (or "deassert" or "clear") are used herein when referring to the rendering of a signal, status bit, or similar apparatus into its logically true or logically false state, respectively. If the logically true state is a logic level one, the logically false state is a logic level zero. And if the logically true state is a logic level zero, the logically false state is a logic level one.

Those skilled in the art will recognize that the boundaries between logic blocks are merely illustrative and that alternative embodiments may merge logic blocks or module elements or impose an alternate decomposition of functionality upon various logic blocks or module elements. Thus, it is to be understood that the architectures depicted herein are merely exemplary, and that in fact many other architectures can be implemented which achieve the same functionality.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. Alternatively, the examples may be implemented as any number of separate integrated circuits or separate devices interconnected with each other in a suitable manner.

Also for example, the examples, or portions thereof, may implemented as soft or code representations of physical circuitry or of logical representations convertible into physical circuitry, such as in a hardware description language of any appropriate type.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A system, comprising:

    a mechanical element that is movable by a user;
    a microphone that is arranged to receive sound signals that comprise (a) sound signals of interest and (b) a mechanical noise resulting from a movement of the mechanical element;
    a mechanical noise reduction module that is arranged to receive or to generate a noise indication that is indicative of an actual or an expected generation of the mechanical noise and to attenuate the mechanical noise in response to the noise indication to provide an attenuated mechanical noise; and
    a communication module that is arranged to transmit output signals that are representative of the sound signals of interest and the attenuated mechanical noise.

2. The system according to claim 1, comprising a mechanical noise sensing module that is arranged to generate the noise indication.

3. The system according to claim 2, wherein the mechanical noise sensing module is arranged to sense vibrations generated by the movement of the mechanical element and to generate the noise indication in response to the vibrations.

4. The system according to claim 3, wherein the mechanical noise sensing module comprises an accelerometer that is arranged to sense the vibrations.

5. The system according to claim 3, wherein the mechanical noise sensing module comprises an bone conduction microphone that is arranged to sense the vibrations

6. The system according to claim 2, comprising a mechanical element sensor arranged to generate electromagnetic signals as a result of the movement of the mechanical element, wherein the mechanical noise sensing module is arranged to generate the noise indication in response to a sensing of the electromagnetic signals.

7. The system according to claim 6, wherein the electromagnetic signals form an interrupt request.

8. The system according to claim 2, wherein there is a difference between a manner in which the mechanical noise sensing module and the microphone sense the mechanical noise; and wherein the mechanical noise reduction module is arranged to utilize the difference to attenuate the mechanical noise.

9. The system according to claim 1, comprising a memory module that stores a mechanical noise signature, wherein the mechanical noise reduction module is arranged to attenuate the mechanical noise by processing the mechanical noise signature.

10. The system according to claim 9, wherein the mechanical noise reduction module is arranged to augment the mechanical noise signature in response to an actual or estimated movement characteristic of the movement of the mechanical element.

11. The system according to claim 10, wherein the movement characteristic is selected out of a duration of the movement, a speed of the movement, and force applied by the user to induce the movement.

12. The system according to claim 1, comprising a memory module that stores multiple mechanical noise signatures that differ from each other, wherein the mechanical noise reduction module is arranged to select a selected mechanical noise signature out of the multiple mechanical noise signatures and to attenuate the mechanical noise by processing the selected mechanical noise signature

13. The system according to claim 12, wherein the mechanical noise reduction module is arranged to select the selected mechanical noise signature in response to an actual or estimated movement characteristic of the movement of the mechanical element.

14. The system according to claim 13, wherein the movement characteristic is selected out of a duration of the movement, a speed of the movement, and force applied by the user to induce the movement.

15. The system according to claim 1, wherein the mechanical noise reduction module is arranged to estimate the mechanical noise by utilizing a similarity between mechanical noise generated at different points of time and dissimilarities between signals of interest received at the different points of time.

16. The system according to claim 1 that is arranged to translate the movement of the mechanical element to game related commands.

17. The system according to claim 1, wherein the system is a game controller.

18. The system according to claim 1, wherein the system is phone conference system.

19. The system according to claim 1, comprising multiple microphones that are located at different locations.

20. The system according to claim 1, comprising an additional microphone, wherein the additional microphone is more sensitive to the mechanical noise than the microphone and wherein the microphone is more sensitive to the sound signals of interest than the additional microphone.

21. A method comprising: receiving, by a microphone, sound signals that comprise (a) sound signals of interest and (b) a mechanical noise resulting from a movement of a mechanical element; receiving or generating, by a mechanical noise reduction module, a noise indication that is indicative of an actual or an expected generation of the mechanical noise; attenuating, by the mechanical noise reduction module, the mechanical noise in response to the noise indication to provide an attenuated mechanical noise; and transmitting, by a communication module, output signals that are representative of the sound signals of interest and the attenuated mechanical noise.

FIG. 1

```
┌─────────────────────────┐              ┌─────────────────────────┐
│                         │              │                         │
│   Mechanical element    │──────────────│      Microphone         │
│         20              │              │         30              │
│                         │              │                         │
└─────────────────────────┘              └─────────────────────────┘
             │
             │                    11
             │
┌─────────────────────────┐              ┌─────────────────────────┐
│  Mechanical noise reduction│           │                         │
│         module          │──────────────│  Communication module   │
│          40             │              │         50              │
│                         │              │                         │
└─────────────────────────┘              └─────────────────────────┘
                                                     │
                                                     │
                                          ┌─────────────────────────┐
                                          │                         │
                                          │     Memory module       │
                                          │         70              │
                                          │                         │
                                          └─────────────────────────┘
```

FIG. 2

FIG. 3

FIG. 4

200

110

205

DSP

115

210

105

Accelerometer

FIG. 5

Event
indicator                    300
                                              110

205 → | DSP     | ←
        |  115    | ←

210 ←

        305        105
              Accelerometer

FIG. 6

Receiving sound signals
210

220

230

Attenuating the mechanical noise
240

Transmitting output signals
250

200

FIG. 7

Europäisches
Patentamt

European
Patent Office

Office européen
des brevets

## EUROPEAN SEARCH REPORT

Application Number

EP 12 19 7652

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 930 372 A (KURIYAMA YUJI [JP]) 27 July 1999 (1999-07-27) <br> * figures 1,2,4,5 * <br> * column 1, lines 4-6 * <br> * column 2, line 40 - column 5, line 64 * <br> * column 6, line 22 - column 7, line 32 * <br> ----- | 1-21 | INV. <br> G10L21/0208 <br> H03G3/34 <br> H04R1/40 <br> H04R3/00 <br> A63F13/06 <br> G06F3/02 |
| X <br><br> A | WO 2005/104091 A2 (SONY COMP ENTERTAINMENT INC [JP]; MAO XIADONG [US]) 3 November 2005 (2005-11-03) <br> * paragraphs [0001], [0004] - [0007] * <br> * paragraphs [0013], [0033], [0034] * <br> * paragraphs [0047], [0049], [0052] * <br> * figures 7,9A * <br> * paragraph [0057] * <br> ----- | 1-3,9, 12,15-21 <br><br> 4-8,10, 11,13,14 | |
| | | | TECHNICAL FIELDS SEARCHED (IPC) <br><br> G10L <br> H03G <br> H04R <br> A63F <br> G06F |

The present search report has been drawn up for all claims

| Place of search | Date of completion of the search | Examiner |
|---|---|---|
| Munich | 13 March 2013 | Tilp, Jan |

EPO FORM 1503 03.82 (P04C01)

**ANNEX TO THE EUROPEAN SEARCH REPORT
ON EUROPEAN PATENT APPLICATION NO.**

EP 12 19 7652

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2013

| Patent document cited in search report | | Publication date | Patent family member(s) | | Publication date |
|---|---|---|---|---|---|
| US 5930372 | A | 27-07-1999 | AU | 7589696 A | 11-06-1997 |
| | | | DE | 69631644 D1 | 01-04-2004 |
| | | | DE | 69631644 T2 | 05-08-2004 |
| | | | EP | 0807286 A1 | 19-11-1997 |
| | | | JP | 9149157 A | 06-06-1997 |
| | | | US | 5930372 A | 27-07-1999 |
| | | | WO | 9719401 A1 | 29-05-1997 |
| WO 2005104091 | A2 | 03-11-2005 | EP | 1733378 A2 | 20-12-2006 |
| | | | JP | 4897666 B2 | 14-03-2012 |
| | | | JP | 2007532946 A | 15-11-2007 |
| | | | TW | I307609 B | 11-03-2009 |
| | | | US | 2005226431 A1 | 13-10-2005 |
| | | | US | 2011223997 A1 | 15-09-2011 |
| | | | WO | 2005104091 A2 | 03-11-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 61578898 B